Europäisches Patentamt

(19) European Patent Office

Office européen des brevets

(11) Publication number: **0 032 291**
**A1**

## EUROPEAN PATENT APPLICATION

(21) Application number: 80303966.8

(22) Date of filing: 06.11.80

(51) Int. Cl.³: **H 01 M 4/80**

(30) Priority: 09.01.80 US 110737

(43) Date of publication of application.
22.07.81 Bulletin 81 29

(84) Designated Contracting States:
DE FR GB SE

(71) Applicant· YARDNEY ELECTRIC CORPORATION
82 Mechanic Street
Pawcatuck, Connecticut(US)

(72) Inventor: Puglisi, Vincent J.
6 Lincoln Road
Waterford Connecticut 06385(US)

(72) Inventor: Carpenter, Benjamin
121 2 Moss Street
Pawcatuck Connecticut 06379(US)

(74) Representative Wilson, Joseph Martin
Withers & Rogers 4 Dyers Buildings Holborn
London, EC1N 2JT(GB)

(54) Improvements in method of manufacture of sintered nickel plaque electrode material.

(57) The present invention is an improvement in the manufacture of sintered nickel plaque electrode material by a method which comprises blending together, either in the dry or wet state, nickel metal powder and one or more binders, then coating or doctoring the resulting blend on a current collector, such as an iron or nickel grid, and sintering the composite to reduce the blend to a porous nickel plaque adhering strongly to the current collector. The improvement comprises adding a selected pore-forming material to the blend before coating or doctoring the blend onto the current collector. The pore former is a material that is selected from the group consisting of nickel oxide, nickel carbonate, nickel hydroxide, nickel oxalate and mixtures thereof, with the first three named materials being preferred. The most preferred species is nickel oxide.

The pore former can be added to the blend in any suitable concentration, for example 1 percent or more, with concentrations as high as 30 or 40 weight percent being effective to increase the porosity of the finished plaque material substantially over that of nickel plaque formed without using the pore former. The pore former is converted during the sintering operation to pure nickel but in the process results in the formation of the desired increased concentration of voids in the plaque. The pore formers utilized in accordance with the improvements of the present method are inexpensive, readily available and highly effective.

## Background of the Invention

### Field of the Invention

The present invention generally relates to sintered nickel plaque fabrication methods and more particularly to an improvement in the method of fabricating porous sintered nickel plaque electrode material.

### Prior Art

The substrate used in the manufacture of nickel hydroxide electrodes and cadmium hydroxide electrodes is sintered nickel sponge or plaque. This plaque is usually manufactured by either a wet aqueous slurry or loose powder technique. The wet slurry method involves blending nickel metal powder together with selected binders and water and in some instances other solvents to disperse the binder. The slurry is then coated onto a metal grid of iron or nickel or the like, commonly referred to as a current collector. In the loose powder method, nickel metal powder and binders are mixed together and the mixture is then doctored onto the current collector.

Whether the wet slurry method or the loose powder method is employed, the next step is sintering of the composite at elevated temperatures for a time sufficient to convert the blend of nickel metal powder and binder to 100 percent nickel metal sponge adhering to the current collector. This sponge has a relatively high porosity of the order of about 75 percent or more, depending on the technique. The plaque or sponge needs to be highly porous in order to be effective for loading the pores thereof with active nickel hydroxide or cadmium hydroxide material during fabrication of electrodes therefrom.

In certain improved methods, a pore former such as the chemical oxamide; having the chemical formula $NH_2COCONH_2$, is utilized to increase the porosity of the nickel plaque material. For these purposes, such a chemical is added to the blend before coating on the current collector and sintering. An alternative technique for the production of higher porosity in the finished nickel plaque material is to conduct the sintering operation at a relatively lower temperature, for example about 800°C to about 900°C rather than the normal sintering range of about 900°C to about 1000°C. This achieves its purposes only to a small degree.

The highest possible porosity is desired for the sintered nickel plaque material in order to provide the highest possible loading level thereof with the electrode active nickel hydroxide or cadmium hydroxide so as to optimize the energy density of the electrode. A relative reduction in plaque weight and relative increase in the amount of energy bearing materials loaded per unit volume into the plaque is highly desired. Unfortunately, the pore formers which are commercially available and used are relatively expensive, in some cases prohibitively so and produce variable results. Many are weak pore formers.

It would therefore be desirable to provide an improved pore former for use during the manufacture of sintered nickel plaque electrode material, which pore former would optimize porosity of the nickel plaque, and also be less expensive, more readily available and more easily handled than conventional pore formers. It would also be desirable to provide a pore former having a particle size range comparable to that of conventional nickel powder utilized in the plaque formation, because more efficient and thorough blending greater uniformity throughout the plaque material result upon sintering when utilizing such a pore former and this is an important parameter of nickel oxide and cadmium hydroxide electrodes. The pore former should also be a solid at normal ambient temperatures and exhibit a density less than that of conventional nickel powder, which density is usually about 8.9 g/cc. Low bulk density is especially desirable in the wet slurry process where high viscosity is required, but where high density is detrimental to the procedure. If the pore former is to be used in the wet slurry technique it should be insoluble in the wet slurry medium such as water. There should be no residue whatever remaining from the pore former upon sintering or at most a residue which is fully chemically and electrochemically compatible with the nickel of the plaque. The pore former should preferably be substantially less expensive than nickel powder itself and be capable of substituting to some degree for the nickel powder in order to reduce the cost of the method.

### Summary of the Invention

The improvements of the present invention in the method of manufacturing sintered nickel plaque materials for electrodes satisfy all of the foregoing needs. The improvements are substantially as set forth in the Abstract above. Thus, pore formers of a selected type are utilized in the improved method. These pore formers are selected from the group consisting of nickel oxide, nickel hydroxide, nickel carbonate, nickel oxalate and mixtures thereof, with the first three named materials preferred and with nickel oxide being most preferred. Each of these materials is available in powder form, is relatively inexpensive and has a particle size range compatible with the nickel powder used in the method. Moreover, these pore formers not only are highly effective but leave no residue except nickel metal itself which forms part of the finished sintered plaque. Consequently, the pore formers can substitute to a substantial extent for the more expensive nickel metal powder in the method. They have been found to be useful in concentrations of up to about 40 weight percent or more in the blend with nickel metal powder. They result in increases in porosity of as much as 5 or more percent. They are storable, easy to use, inexpensive and highly efficient. Their concentration can vary as desired. Further features of the present invention are set forth in the following detailed description and the accompanying drawings.

## Drawings

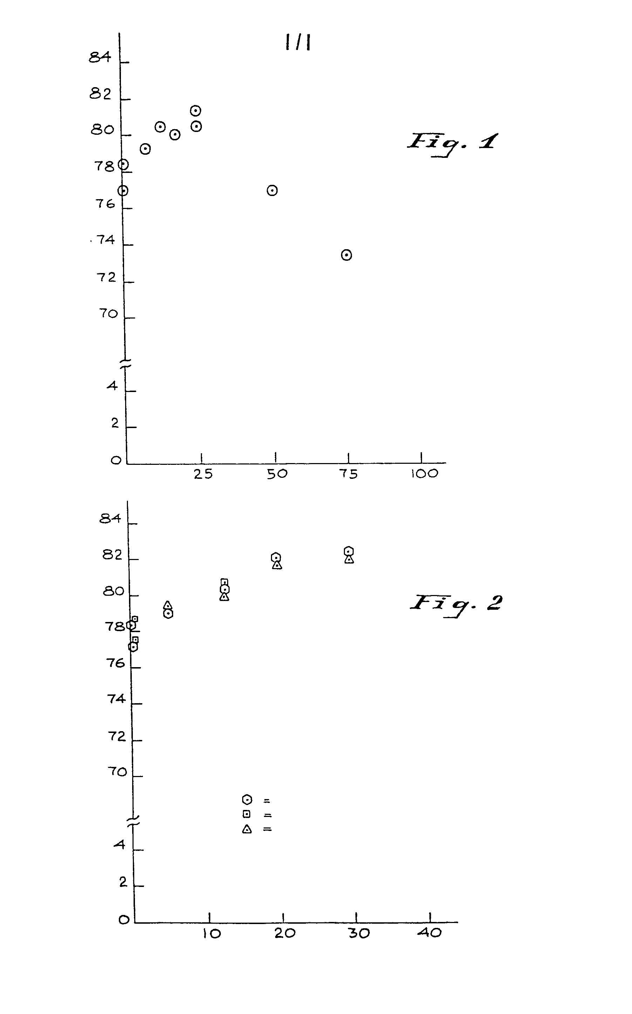

Figure 1 is a graph containing a curve depicting the porosity of a sintered nickel plaque plotted against the concentration of plaque nickel derived from nickel oxide (pore former); and,

Figure 2 is a graph containing three separate curves. each depicting the sintered nickel plaque plotted against the concentration of plaque nickel, in one case derived from nickel carbonate (pore former), in another, derived from nickel hydroxide (pore former) and in the third, derived from nickel oxalate.

## Detailed Description

In accordance with the present invention, selected pore formers are added to a nickel metal powder before the powder is formed into a porous sintered nickel plaque utilized in the manufacture of a nickel plaque electrode. The pore formers are selected from the group consisting of nickel oxide, nickel hydroxide, nickel carbonate, nickel oxalate and mixtures thereof and it is preferred that one or more of the first three named nickel metal powder in solid particulate form and in a concentration, for example, of about 1-40 wt. percent of the total of the pore former and nickel metal powder. The resulting mixture is then converted to 100% nickel metal sponge or plaque material by either a wet slurry technique followed by sintering or a dry powder technique followed by sintering. The resulting sponge has a relatively high porosity of the order of about 75% or more. The porosity is needed so that the sponge or plaque can be effectively loaded with active nickel hydroxide and additives or cadmium hydroxide and additives or a mixture thereof during fabrication of the desired nickel plaque electrode. The pore fomer is selected in part with reference to what technique is utilized to convert the nickel metal powder and the pore former into the desired shape before sintering. Thus, if the wet slurry technique is to be utilized, the pore former should be insoluble in the wet slurry medium which may be, for example, water. For example, although nickel oxide and nickel carbonate are satisfactory for use in the wet slurry technique, it is preferred not to utilize nickel hydroxide because nickel hydroxide is somewhat soluble in water. By nickel hydroxide is meant nickelous hydroxide having the formula $Ni(OH)_2$. Nickel oxalate having the formula $NiC_2O_4 \cdot 2H_2O$ is insoluble in water and is suitable for use in the wet slurry technique. The following specific examples set forth certain details of the present invention:

EXAMPLE I

A mixture of 75 grams of nickel powder and 32 grams of nickel oxide, both having the characteristics set forth in Table I below,

was added to a binder mixture consisting of 1.6 grams of carboxy methyl cellulose binder, 7 cc of the dispersant methanol and 100 cc of the diluent water. The final viscosity of the resulting slurry was approximately 250,000$\pm$ 10,000 centiposes as measured by a Brookfield viscometer. This slurry was then poured into an open topped mold having a 0.005 inch thick solid nickel sheet approximately 2" disposed in the bottom thereof. The sheet was to serve as the grid collector in the finished nickel electrode The mold was filled with the slurry. The mold had the following dimensions: 5" x 2" x .05". The mold was removed from around the slurry after the slurry had dried sufficiently to be shape-retaining (after approximately 4 hours) and then the drying was allowed to continue overnight (12 hours). The thoroughly dry molded slurry adhering to the nickel sheet was then passed into a furnace disposed in a hydrogen atmosphere and sintered for about 0.2 hours at about 1,000°C. until the nickel oxide was totally converted to nickel and all traces of the carboxy methyl cellulose, methanol and water had disappeared so that a pure porous nickel plaque remained. The porosity of the plaque was measured by water imbibation and was determined to be 81.7%. The plaque was strong and of superior quality, and had the collector strongly adhering thereto. It was then ready for impregnation with nickel hydroxide and/or cadmium hydroxide in the fabrication of a finished nickel plaque electrode.

7

TABLE I

| COMPOUND | CHEMICAL FORMULA | FORM | % NICKEL | PARTICLE SIZE ($\mu$) | BULK DEN-SITY* (g/cc) | MP± (°C) | SOLUBILITY+ (g/cc) |
|---|---|---|---|---|---|---|---|
| NICKEL OXIDE | $NiO$ | Solid | 76 | ∿10 | 2.42 | Decomposes | Insoluble |
| NICKEL CARBONATE | $Ni(CO_3)o \times H_2O$ | Solid | 46 | | .27 | Decomposes | .0093 |
| NICKEL HYDROXIDE | $Ni(OH)_2$ | Solid | 62 | | .56 | Decomposes | .013 |
| OXAMIDE | $C_2O_2(NH)_2$ | Solid | 0 | 2-12 | .39 | Decomposes | Insoluble |
| NICKEL POWDER (Type 255) | $Ni$ | Solid | 100 | 2.2-3.0 | .55 | – | Insoluble |
| | | | | | 1.18 | – | |
| NICKEL OXALATE | $NiC_2O_4 \cdot 2H_2O$ | Solid | 33 | ～ | | | Insoluble |

*   Scott Volumeter measurement

+   In cold water

±   Melting point

BAD ORIGINAL

## EXAMPLE II

The procedure of Example I was carried out except that the powder mixture consisted of 87.5 grams of nickel metal powder and 27 grams of nickel carbonate having the properties set forth in Table I above. The same amounts and type of binder, dispersant and diluent were used as specified in Example I. The same molding and sintering conditions as Example I were also employed. The resulting sintered nickel plaque exhibited a porosity of 81.1%. The plaque strongly adhered to the nickel sheet and was of excellent quality. The procedure for making the plaque was simple, direct, inexpensive and effective.

## EXAMPLE III

In a first run, the procedure of Example I was repeated except that the powder mix consisted of 80 grams of the nickel powder and 32 grams of nickel hydroxide having the properties shown in Table I. The resultant plaque had a porosity of 82.2% and was of high quality. In a second run, the procedure of Example I was followed, except that the powder mix consisted of 87.5 grams of the nickel powder and 39 grams of nickel oxalate having the properties shown in Table I. The resultant plaque had a porosity of 81.8 percent and was of excellent quality.

## EXAMPLE IV

The procedure of Example I was repeated in a series of runs, except that only the nickel powder was utilized and in a concentration of 100 grams in each instance. The resulting plaques exhibited porosites ranging from 77% to 79%. Although the plaque porosity could be slightly increased by reducing the sintering temperature, the overall strength of such a plaque and its bond to the current collector were commensurately reduced. The result was a plaque of unacceptably lowered durability.

## EXAMPLE V

A blend consisting of 87.5 grams of nickel powder and 16.4 grams of nickel oxide, both having the properties shown in Table I, was made. Approximately half the powdered mixture was doctored into a mold and then a nickel expanded metal grid approximately 8.5" by 6.5" by .018" thick and having a mesh size of 3Ni 18-3/0 was placed over the open top of the mold. The remaining powder was then added on top of the metal grid and doctored to obtain a required pre-sintering thickness of about 0.110 inch. This assembly was then placed in a sintering furnace and subjected to 1,000°C in a hydrogen atmosphere for 0.2 hours to form a pure nickel plaque having a porosity of 86% and having good strength and adhesion throughout.

In a second run the loose powder procedure utilized for the above blend for nickel powder and nickel oxide was repeated with a mixture consisting of 75 grams of nickel powder and 40 grams of nickel hydroxide having the properties set forth in Table I. The resultant plaque had a sintered porosity of 91% and was acceptable in strength and overall quality.

In a third run, the above-specified dry powder procedure was repeated but substituting a mixture consisting of 85 grams of nickel oxide and 47 grams of nickel oxalate having the properties listed in Table I. A plaque having a sintered porosity of 85% was obtained. The plaque was found to be of acceptable strength throughout. Nickel oxalate, however, was of substantially high cost and lesser availability and therefore was less acceptable than the nickel oxide, nickel carbonate and nickel hydroxide.

## PLAQUE CONVERSION TO NICKEL ELECTRODE

A.  The plaque obtained by the procedure of Example I was electrochemically impregnated to a level of 1.69 grams of a mixture of nickel hydroxide and cobalt hydroxide having a weight ratio of about 10:1 per cc. of void volume in the plaque.  This impregnation was carried out in a nickel nitrate-and cobalt nitrate-containing bath at 80°C for 60 minutes with the following power consumption: 1.3 watts/in$^2$.

The plaque after the impregnation exhibited a 1.16 utilization of weight gain calculated as follows: $AH_{out} \div AH_{In}$.

This is comparable to utilizations in the range of 1.12-1.25 typically measured for nickel oxide electrodes fabricated by conventional plaque-forming techniques.  The finished electrode obtained by this procedure was found to be mechanically sound.

B.  The plaque obtained by the procedure specified in the first run of Example V was impregnated electrochemically by the procedure described above but to a level of 1.59 gram per cc. void volume.  The electrode exhibited a 1.19 utilization of weight gain.  A series of these electrodes were tested in nickel zinc cells having the following characteristics: 250 AH, 1.6V, 30 WH/lb units having 8.38 in. x 6.28 in. x .070 in. thick electrodes.

In each instance the electrodes underwent 20 cycles at 80% depth of discharge.  The electrodes were then examined and found to be mechanically sound and dimensionally unchanged.  Eight of these electrodes were blanked to measure 5.75" x 2.75" x 0.70" and rebuilt into a 30 AH nickel zinc cell.  The cell had the following other physical characteristics: actual capacity of 32.3+ AH, 1.6 V, 32 WH/lb.

The cell completed 120 cycles at 80% depth of discharge.

The electrodes were then examined and found to be mechanically sound but thickened 0.002".  This thickening is comparable to that

The preceding examples clearly illustrate that porous nickel plaques which can be converted into nickel electrodes can be provided with improved porosity in a simple, inexpensive manner by incorporation therein of effective concentrations of one or more of the pore formers specified above. The plaques so produced are capable of imbibing larger concentrations of active nickel and cadmium material than formerly. The pore formers are inexpensive and effective. Various other advantages are as set forth in the foregoing.

Various modifications, changes, alterations and additions can be made in the improvements in the present method, the steps and the parameters thereof. All such changes, modifications, alterations and additions as are within the scope of the appended claims form part of the present invention.

What is claimed is:

1. In the method of manufacturing sintered nickel plaque electrode material, which method includes blending nickel metal powder together with binder, coating the resulting blend on a metal current collector and then sintering the blend thereon at elevated temperatures until the blend forms pure nickel sponge on the collector and adheres thereto, the improvement which comprises adding an improved pore former to said blend before coating the blend on said collector, said pore former being material selected from the group consisting of nickel oxide, nickel carbonate, nickel hydroxide, nickel oxalate and mixtures thereof.

2. The improved method of claim 1 wherein said pore former is present in said blend in a concentration sufficient to substantially increase the porosity of said sintered plaque.

3. The improved method of claim 2 wherein said pore former contributes to said plaque about 10-30 weight percent of the total nickel in said plaque.

4. The improved method of claim 2 wherein said pore former increases the porosity of said plaque at least about 3-4 percent.

5. The improved method of claim 2 wherein said pore former is preferred material selected from the group consisting of nickel oxide, nickel hydroxide, nickel carbonate and mixtures thereof.

6. The improved method of claim 5 wherein said blend is an aqueous slurry.

7. The improved method of claim 5 wherein said blend is a dry powder blend.

8.  The improved method of claim 1 wherein said pore former comprises nickel hydroxide.

9.  The improved method of claim 1 wherein said pore former comprises nickel oxide.

10. The improved method of claim 1 wherein said pore former comprises nickel carbonate.

Fig. 1

Fig. 2

| Category | DOCUMENTS CONSIDERED TO BE RELEVANT | | Relevant to claim | CLASSIFICATION OF THE APPLICATION (Int. Cl.³) |
|---|---|---|---|---|
| | Citation of document with indication, where appropriate, of relevant passages | | | |
| X | FR - A - 1 562 689 (TEXAS INSTRUMENTS)  * Claims I 1,2,4,6,9; page 8, lines 13-17; pages 4-5 *  & GB - A - 1 214 226 | | 1-7, 9,10 | H 01 M 4/80 |
| | -- | | | |
| X | US - A - 3 796 565 (H.A. HANCOCK, D.J.I. EVANS)  * Claims 5,7,8,9; column 1, lines 1-11; lines 50-59; column 2, lines 20-65 * | | 1,2,5, 6,8,9 | |
| | -- | | | **TECHNICAL FIELDS SEARCHED (Int. Cl.³)** |
| X | FR - A - 1 241 461 (ACCUMULATOREN-FABRIK)  * Summary, point A 1,2a,3,4; page 2, right-hand column, line 10 * | | 1,2,3, 7 | H 01 M 4/80 |
| | -- | | | |
| | GB - A - 332 052 (JAMES YATE JOHNSON)  * Page 2, lines 22-31,41-57 * | | 1,5,7, 8,9,10 | |
| | -- | | | |
| | US - A - 2 964 582 (J. DONALD MOULTON)  * Claim 1; column 1, lines 30-33 * | | 1,2,3, 5,6,9 | **CATEGORY OF CITED DOCUMENTS**  X: particularly relevant  A: technological background  O: non-written disclosure  P: intermediate document  T: theory or principle underlying the invention  E: conflicting application  D: document cited in the application  L: citation for other reasons |
| | -- | | | |
| | US - A - 2 672 494 (A. FLEISCHER)  * Claim 1; column 2, lines 17-39 * | | 1,5,7, 9 | |
| | --                     ./. | | | &: member of the same patent family, corresponding document |

The present search report has been drawn up for all claims

| Place of search | Date of completion of the search | Examiner |
|---|---|---|
| The Hague | 08-04-1981 | D'HONDT |

EPO Form 1503.1  06.78

European Patent Office

**EUROPEAN SEARCH REPORT**

| Category | Citation of document with indication, where appropriate, of relevant passages | Relevant to claim |
|---|---|---|
| A | FR - A - 1 435 726 (VEB. KERAMISCHE WERKE HERMS DORF) <br><br> * Page 1, left-hand column, line 39 - right-hand column, line 1 * | |
| P | PATENTS ABSTRACTS OF JAPAN, vol. 4, nr. 52 (E-7)(534) April 18,1980 71E7. <br><br> & JP - A - 80 21867 (YUASA DENCHI) | 1,2,5, 7,10 |
| P | PATENTS ABSTRACTS OF JAPAN, vol.4, nr. 52 (E-7)(534) April 18,1980 70E7 <br><br> & JP - A - 80 21866 (YUASA DENCHI) | 1,2,3, 5,7,9 |
| P | CHEMICAL ABSTRACTS, vol. 93, no. 8, August 25, 1980, abstract 75796t Columbus. Ohio. USA <br><br> & JP - A - 80 39179 (MATSUSHITA ELECTRIC INDUSTRIAL CO.) 18-03-'80 | 1,5,6, 8 |

**DOCUMENTS CONSIDERED TO BE RELEVANT**

CLASSIFICATION OF THE APPLICATION (Int. Cl.³)

TECHNICAL FIELDS SEARCHED (Int. Cl.³)

EPO Form 1503.2   06.78